(19) Europäisches Patentamt
European Patent Office
Office européen des brevets

(11) **EP 1 895 341 A1**

(12) **EUROPEAN PATENT APPLICATION**

(43) Date of publication:
**05.03.2008 Bulletin 2008/10**

(51) Int Cl.:
**G02B 7/02** *(2006.01)*  **B29D 11/00** *(2006.01)*

(21) Application number: **07115257.3**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **30.08.2006 JP 2006233727**

(71) Applicant: **Sony Corporation**
**Minato-ku**
**Tokyo (JP)**

(72) Inventors:
• **Tsuji, Takumi**
**TOKYO (JP)**
• **Ishibashi, Yuichiro**
**TOKYO (JP)**

(74) Representative: **Thévenet, Jean-Bruno et al**
**Cabinet Beau de Loménie**
**158, rue de l'Université**
**75340 Paris Cédex 07 (FR)**

(54) **Optical element and production device for producing same**

(57)     A lens (101) produced from a radial rays-curing material comprises a lens proper portion (102) that serves as an optically effective part of the lens (101), and a circular flange portion (103) that surrounds the lens proper portion (102) and serves as an optically non-effective part of the lens (101). The circular flange portion (103) has front and rear surfaces (103a, 103b) that are different in appearance.

# FIG.8

**Description**

BACKGROUND

The present invention relates to an optical element or lens that uses ultraviolet-curing resins or the like as a material, and a production device for producing the optical element.

In optical elements such as lens or the like used in optical instruments such as cameras or the like, there are generally two types, one being made from glass and the other being from resins. The optical elements made from resins are light in weight, excellent in shock resistance and low in cost, as compared with those made from glass, and thus, the resinous optical elements have been widely used in the field of optical instruments in these days.

For producing the resinous optical elements, there are various methods, one of which is an injection method in which an injection molding is practically applied to thermoplastic resins, such as, polymethyl methacrylate (PMMA), polycarbonate (PC), cycloolefin polymer and the like, and the other of which is a casting method in which a casting is practically applied to thermosetting resins, such as, diethylene glycol bisarylcarbonate (CR-39) and the like, while heating and curing the same.

In the above-mentioned injection method for the thermoplastic resins, mass production of the optical elements, for example, lenses is readily achieved. However, the optical elements thus produced tend to fail to exhibit a satisfied internal homogenization and particularly the lenses thus produced tend to fail to have a satisfied lens-surface transfer from the molding surface of mold.

While, in the casting method for the thermosetting resins, the optical elements thus produced exhibit a satisfied internal homogenization as well as a satisfied lens-surface transfer. However, in this casting method, a very long time (about several hours to several tens of hours) is needed for sufficiently curing the resins, which is thus not suitable to mass production.

For solving the drawbacks possessed by the above-mentioned casting method for the thermosetting resins, methods using a so-called ultraviolet-curing resins have been hitherto proposed and put into practical use, some of which are disclosed in Japanese Laid-open Patent Applications which are Tokkaisho 55-132221, Tokkaihei 07-100835 and Tokkaihei 08-1807.

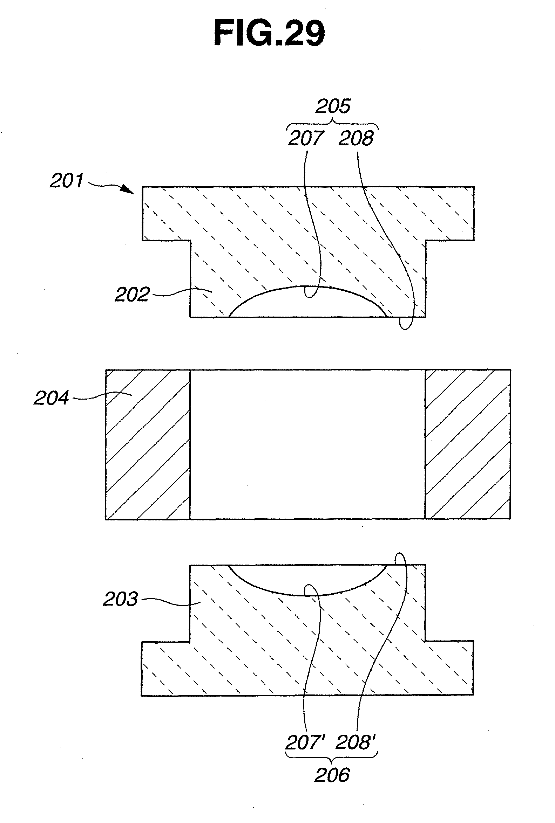

A common concept of the measures disclosed by these three publications will be briefly described in the following with reference to Figs. 29, 30 and 31 of the accompanying drawings.

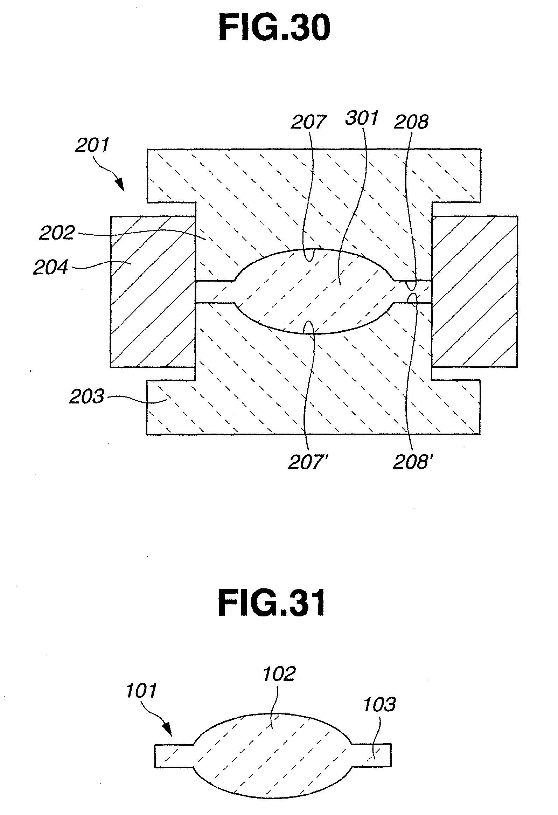

Fig. 29 shows a schematically illustrated sectional view of a production device 201 for producing a lens 101 (see Fig. 31) of ultraviolet-curing resin.

The production device 201 comprises an upper glass mold 202, a lower glass mold 203 and a centering sleeve 204 by which the upper and lower glass molds 202 and 203 are centered and positioned. Although not shown in the drawing, a holding device is employed for holding the two glass molds 202 and 203 in a vertical direction.

As shown in Fig. 29, mutually facing portions 205 and 206 of the upper and lower glass molds 202 and 203 are formed with respective concave recesses with molding surfaces 207 and 207' by which a lens proper portion 102 (see Fig. 31) of the lens 101 is produced as is described hereinafter.

Furthermore, the mutually facing portions 205 and 206 of the two glass molds 202 and 203 are formed with respective circular flat top surfaces 208 and 208' by which a circular flange portion 103 (see Fig. 31) of the lens 101 is produced as is described hereinafter.

As shown in Fig. 31, the circular flange portion 103 surrounds the lens proper portion 102. The molding surfaces 207 and 207' and circular flat surfaces 208 and 208' of the two glass molds 202 and 203 are polished like a mirror finished surface.

As is seen from Fig. 30, when practically used, the upper and lower glass molds 202 and 203 are put into the centering sleeve 204 and tightly fastened in the sleeve 204 leaving therebetween a certain clearance that has a shape of the lens 101 of Fig. 31.

In the following, steps for producing the lens 101 will be described.

First, the upper and lower glass molds 202 and 203 are dismantled from the centering sleeve 204 as is seen from Fig. 29. Then, a given amount of non-cured ultraviolet-curing resin 301 is put in the concave recess (207') of the lower glass mold 203, and then the upper and lower glass molds 202 and 203 are properly set in the centering sleeve 204. Thus, the resin 301 is compressed by the upper and lower glass molds 202 and 203 thereby being shaped into a form of the shaped clearance defined between the mutually facing portions 205 and 206 of the upper and lower glass molds 202 and 203, as is seen from Fig. 30.

Then, ultraviolet rays are applied to the resin 301 in the shaped clearance for a certain time through the upper and lower glass molds 202 and 203 to cure and harden the resin 301. After the resin 301 is sufficiently cured and hardened, de-molding is carried out. That is, the upper and lower glass molds 202 and 203 are removed from the centering sleeve 204. With these steps, the lens 101 is produced.

In the above-mentioned method for production of the lens 101, various studies have been conducted for carrying out a smoothed de-molding for the purpose of increasing a profile regularity of the lens 101 and shortening a production cycle of the same 101.

One of the studies is described in Japanese Laid-open Patent Application Tokkai 2002-127157. In the study or method of this publication, a so-called releasing film of fluorine is formed on the molding surface of the molds. For forming the film on the molding surface, a solvent pregnant with a fluorine is evenly applied to the molding surface of molds, then, the molding surface is heated to volatilize the solvent for placing a thinner film of fluorine on the molding surface, and then, ionizing radiation is applied to the thinner film for fixing the same onto the molding surface.

The other of the studies is described in Japanese Laid-open Patent Application Tokkai 2006-21507. In the study or method of this publication, for removing a product (viz., lens) from paired glass molds, first, one of the molds is released from the product leaving the other mold in contact with the product, and then, the other mold is released from the product. For this orderly de-molding, the two glass molds are constructed to contain different amounts of silica and/or fluorine for exhibiting a difference in product releasing ability therebetween.

SUMMARY

In the method of Japanese Laid-open Patent Application Tokkai 2002-127157, undesired deformation of the product (viz., lens) caused by a difficulty in releasing the product from the molds is substantially suppressed and thus a satisfied profile regularity of the product is obtained. However, actually, de-molding is so made that releasing the two molds from the product is not regularly carried out. That is, when the de-molding is carried out, one mold is released from the product and the other mold is not released from the product while leaving irregularity of order as to which mold is left in contact with the product. In other words, it sometimes occurs that the product is left in unexpected mold, which affects scheduled working steps of the de-molding. It has been revealed that this undesired de-molding tends to occur particularly when the molding surfaces of the two molds have substantially the same size.

Of course, such undesirable de-molding may be solved when the two molds are provided with eject means for ejecting the product. However, this measure brings about a complicated and high-cost construction of the production device.

Furthermore, in the method described in Japanese Laid-open Patent Application Tokkai 2002-127157, at least three complicated steps are needed, which are (1) evenly applying the fluorine contained solvent to the molding surface of molds, (2) heating the molding surface to volatize the solvent for formation of the thinner film of fluorine on the molding surface and (3) applying the ionizing radiation to the thinner film of fluorine to fix the same to the molding surface. As is known, these complicated steps cause increase in production cost.

Furthermore, the thinner film of fluorine thus provided on the molding surfaces of the molds has a certain life, and thus, for keeping a satisfied releasing ability of the molding surfaces, the above-mentioned complicated steps should be carried out repeatedly every given period.

In the method of Japanese Laid-open Patent Application Tokkai 2006-21507, the molds used are constructed to contain different amounts of silica and/or fluorine, and thus, the glass material used for the molds has a limitation.

In optical elements, particularly, the lenses produced in the above-mentioned conventional methods, it is difficult to discriminate front and rear sides of the lenses with inspector's eyes because such front and rear sides have very similar appearances.

Accordingly, it is an object of the present invention to provide a production device for producing an optical element or lens, which is free of the above-mentioned drawbacks possessed by the conventional production devices. That is, the production device of the invention is simple in construction, low in cost and includes glass molds which have no limitation in glass material, and the production device of the invention is constructed to positively leave a product on a predetermined one of molds.

It is another object of the present invention to provide an optical element of which front and rear sides can be easily discriminated with inspector's eyes.

In accordance with a first aspect of the present invention, there is provided a lens produced from a radial rays-curing material, which includes a lens proper portion that serves as an optically effective part of the lens; and a circular flange portion that surrounds the lens proper portion, the circular flange portion serving as an optically non-effective part of the lens, wherein the circular flange portion has front and rear surfaces that are different in appearance.

In accordance with a second aspect of the present invention, there is provided a production device of producing an optical element by curing a radial rays-curing resin, which includes first and second molds of which mutually facing portions are respectively formed with first and second recesses which are respectively surrounded by first and second top surfaces, at least one of the first and second molds being constructed of a material that permits penetration of radial rays therethrough; and a centering sleeve into which the first and second molds are partially received in such a manner that the first and second recesses face each other leaving a certain clearance between the first and second top surfaces, thereby to define between the mutually facing portions of the first and second molds a shaped clearance that is adapted to receive therein a given amount of non-cured radial rays-curing resin, the radial rays-curing resin being cured and hardened when receiving the radial rays; wherein the first top surface is constructed to exhibit an easier releasing ability to the cured and hardened radial rays-curing resin than the second top surface.

BRIEF DESCRIPTION OF THE DRAWINGS

Other objects and advantages of the present invention will become apparent from the following description when taken in conjunction with the accompanying drawings, in which:

Fig. 1 is a schematically illustrated sectional view of a production device which is a first embodiment of the present invention;

Fig. 2 is a perspective view of the production device of the first embodiment;

Fig. 3 is an enlarged sectional view taken along the line III-III of Fig. 2;

Fig. 4 is a schematic view showing an advantageous releasing effect exhibited by a roughed circular top surface of an upper glass mold;

Figs. 5 to 8 are sectional views of the production device of the first embodiment, showing successive steps for producing a lens;

Fig. 9 is a schematically illustrated sectional view of a production device which is a second embodiment of the present invention;

Fig. 10 is a perspective of the producing device of the second embodiment;

Fig. 11 is an enlarged sectional view taken along the line XI-XI of Fig. 10;

Fig. 12 is an enlarged schematic and partial view of the production device of the second embodiment, showing an advantageous effect exhibited by an annular ridge possessed by lower glass mold;

Fig. 13 is a perspective view showing a modification of the annular ridge;

Fig. 14 is a view similar to Fig. 13, showing another modification of the annular ridge;

Figs. 15 to 18 are sectional views of the production produce of the second embodiment, showing successive steps for producing a lens;

Fig. 19 is a schematically illustrated sectional view of a production device which is a third embodiment of the present invention;

Fig. 20 is a plan view of a centering sleeve used in the production device of the third embodiment;

Fig. 21 is a plan view of a modification of the centering sleeve usable in the production device of the third embodiment;

Figs. 22 to 26 are sectional views of the production device of the third embodiment, showing successive steps for producing a lens;

Fig. 27 is a schematically illustrated sectional view of a production device of a fourth embodiment of the present invention;

Fig. 28 is a view similar to Fig. 27, but showing a production device of a fifth embodiment of the present invention;

Fig. 29 is a schematically illustrated sectional view of a conventional production device;

Fig. 30 is a sectional view of the conventional production device in an assembled condition; and

Fig. 31 is a sectional view of a lens that is produced by the conventional production device.

DETAILED DESCRIPTION OF THE EMBODIMENTS

In the following, embodiments of the present invention will be described in detail with reference to the accompanying drawings.

For ease of understanding, various directional terms, such as, right, left, upper, lower, rightward and the like will be used in the following description. However, such terms are to be understood with respect to a drawing or drawings on which a corresponding element or portion is shown.

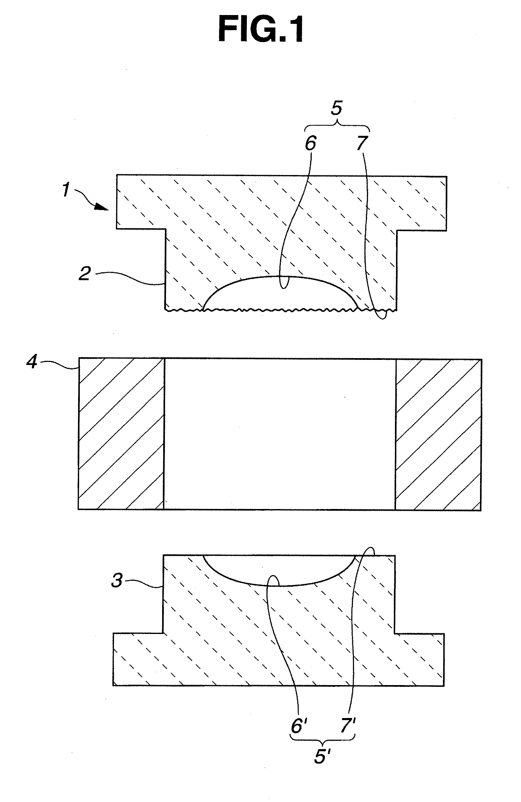

Referring to Figs. 1 to 8, there is shown a production device 1 of a first embodiment of the present invention, which produces a lens as an optical element.

As is seen from Fig. 1, the production device 1 comprises an upper glass mold 2, a lower glass mold 3 and a centering sleeve 4 by which the upper and lower glass molds 2 and 3 are centered and positioned to each other. The upper and lower glass molds 2 and 3 are constructed of a glass material that shows a high transmittance to an ultraviolet ray. For such glass material, synthetic quartz may be used as well as other glass materials.

As will be understood from Fig. 1, for centering the upper and lower glass molds 2 and 3, mutually facing smaller diameter portions of these molds 2 and 3 are inserted into a bore of the centering sleeve 4.

Although not shown in the drawing, a holding device is employed for holding the two molds 2 and 3 in a vertical direction.

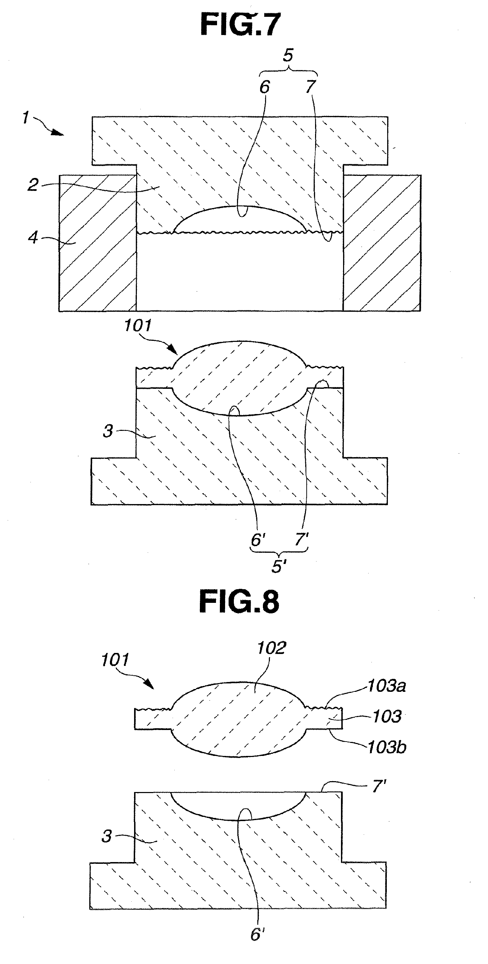

As shown in Fig. 1, mutually facing portions 5 and 5' of the upper and lower glass molds 2 and 3 are formed with respective recesses with concave molding surfaces 6 and 6' by which a lens proper portion 102 (see Fig. 8) of a lens 101 is produced as will be described in detail hereinafter.

Furthermore, as is seen from Fig. 1, the mutually facing portions 5 and 5' of the two glass molds 2 and 3 are formed with respective circular top surfaces 7 and 7' by which a circular flange portion 103 (see Fig. 8) of the lens 101 is produced as will be clarified hereinafter.

The molding surface 6 or 6' of each glass mold 2 or 3 is spherical or aspherical in shape, and the circular top surface 7 or 7' of each glass mold 2 or 3 is entirely flat and constructed to surround the corresponding concave recess 6 or 6'.

As shown in Fig. 8, the lens 101 thus produced comprises the lens proper portion 102 that is an optically functional portion and the circular flange portion 103 that is an optically non-functional portion. That is, when the lens 101 is set in a lens-barrel (not shown), the circular flange portion 103 serves as a mounting edge fixed to an inner cylindrical wall of the lens-barrel.

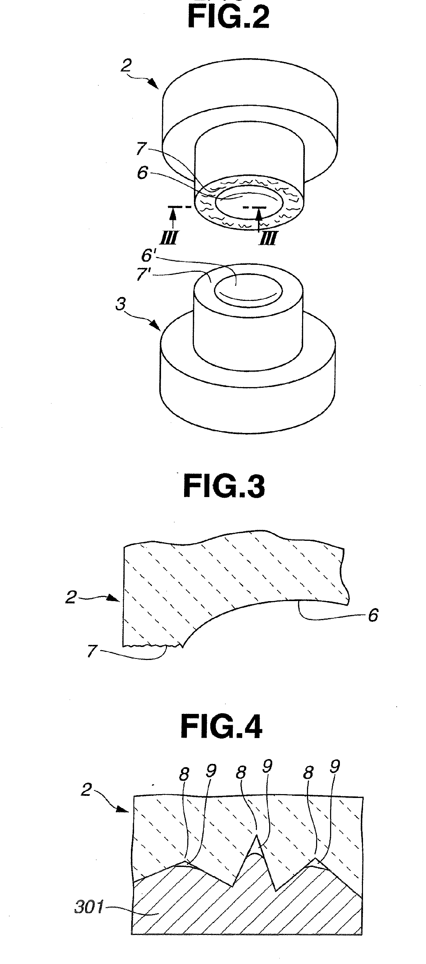

As will be understood from Figs. 1 to 3, particularly Fig. 3, the circular top surface 7 of the upper glass mold 2 is roughened as compared with the circular top surface 7' of the lower glass mold 3.

That is, the molding surface 6 of the upper glass mold 2 and the top surface 7' and molding surface 6' of the lower glass mold 3 are polished like a mirror finished surface in a range of about 20 nm in Ra Standard, while the top surface 7 of the upper glass mold 2 is finished or dressed in a range of about 12.5 $\mu$m in Ra Standard. The roughened top surface 7 of the upper glass mold 2 is produced by employing a sand blast method, a satin finish method or the like.

As is described hereinabove, the circular top surface 7 of the upper glass mold 2 is finished rougher than the circular top surface 7' of the lower glass mold 3.

This is because of causing the upper glass mold 2 to exhibit a much easier releasing property against a product (viz., the lens 101) than the lower glass mold 3.

As will be described in detail hereinafter, upon molding of the lens 101, the mirror finished circular top surface 7' of the lower glass mold 3 intimately contacts the product (or lens) 101 establishing a so-called optical contact state therebetween, and thus, the lower glass mold 3 is not easily released from the product or lens 101.

While, as is understood from Fig. 4, in case of the upper glass mold 2, there are inevitably produced great numbers of blank portions 9 at bottoms of the fine cuts 8, which are not filled with an ultraviolet-curing resin 301. That is, the roughened top surface 7 of the upper glass mold 2 does not intimately contact the product (or lens) 101 and thus does not establish the optical contact state therebetween. This means that the upper glass mold 3 is easily released from the product (or lens) 101 as compared with the upper glass mold 2.

In the following, successive steps of producing the lens 101 by practically using the above-mentioned production device 1 will be described in detail with the aid of the drawings.

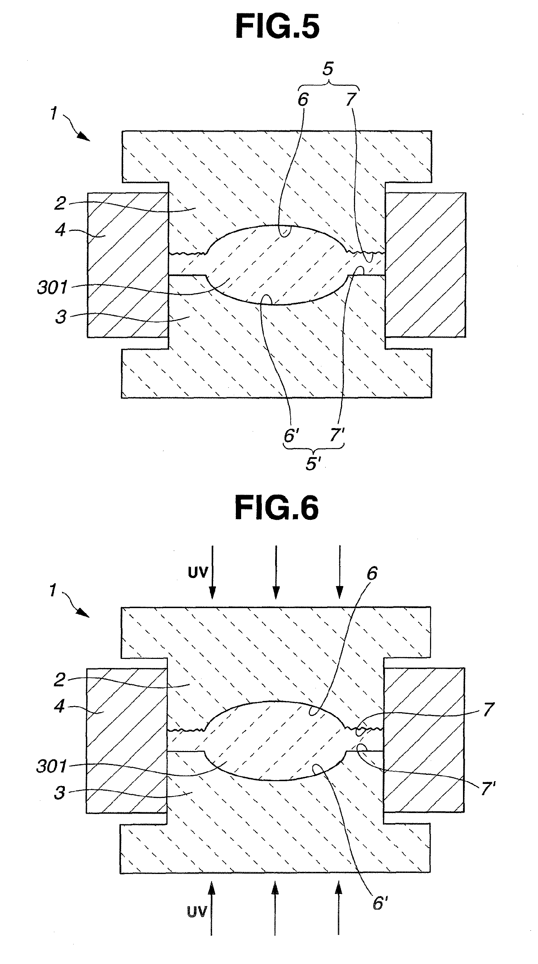

First, the upper and lower glass molds 2 and 3 are dismantled from the centering sleeve 4 as is seen from Fig. 1, and then a given amount of non-cured ultraviolet-curing resin 301 is put in the concave recess (6') of the lower glass mold 3, and then the upper and lower glass molds 2 and 3 are properly set in the centering sleeve 4. Thus, the resin 301 is compressed by the upper and lower glass molds 2 and 3 thereby being shaped into a form of the shaped clearance defined between the mutually facing portions 5 and 5' of the upper and lower glass molds 2 and 3, as is seen from Fig. 5.

Then, as is seen from Fig. 6, ultraviolet rays "UV" are applied to the resin 301 in the shaped clearance for a given time through the upper and lower glass molds 2 and 3 to cure and harden the resin 301. With this curing step, the ultraviolet-curing resin 301 becomes hardened in the production device 1. That is, a product (or lens) 101 is produced and left in the production device 1.

Then, as is seen from Fig. 7, de-molding is carried out by moving the upper glass mold 2 upward together with the centering sleeve 4. Under this step, the lower glass mold 3 is kept fastened.

As is mentioned hereinabove, because of the advantageous releasing ability of the roughened circular top surface 7 of the upper glass mold 2, the releasing of the upper glass mold 2 from the product 101 is easily and smoothly carried out. Since the circular top surface 7' of the lower glass mold 3 is polished like a mirror finished surface, the product 101 is forced to remain in the lower glass mold 3.

Then, as is seen from Fig. 8, the product 101 is removed from the lower glass mold 3. If this product releasing is not easily or smoothly made, the circular top surface 7' of the lower glass mold 3 may be somewhat or partially roughened.

The product 101 is then subjected to a cleaning process for cleaning the lens proper portion 102 of the product 101. With this, the lens 101 is finally produced.

As is seen from Fig. 8, the circular flange portion 103 of the product (or lens) 101 thus removed from the production device 1 has a roughened upper surface 103a and a smoothed lower surface 103b.

Since the circular flange portion 103 has upper and lower surfaces 103a and 103b that are different in appearance, it is easy to discriminate the front and rear sides of the product (or lens) 101.

In the above-mentioned first embodiment, the top surface 7 of the upper glass mold 2 is roughened and the top surface 7' of the lower glass mold 3 is polished. However, if desired, the top surface 7 of the upper glass mold 2 may be polished and the top surface 7' of the lower glass mold 3 may be roughened. In this case, the product (or lens) 101 is enforcedly remained in the upper glass mold 2.

In the above-mentioned first embodiment, the top surface 7 of the upper glass mold 2 is entirely roughened. However, if desired, the top surface 7 may be partially roughened.

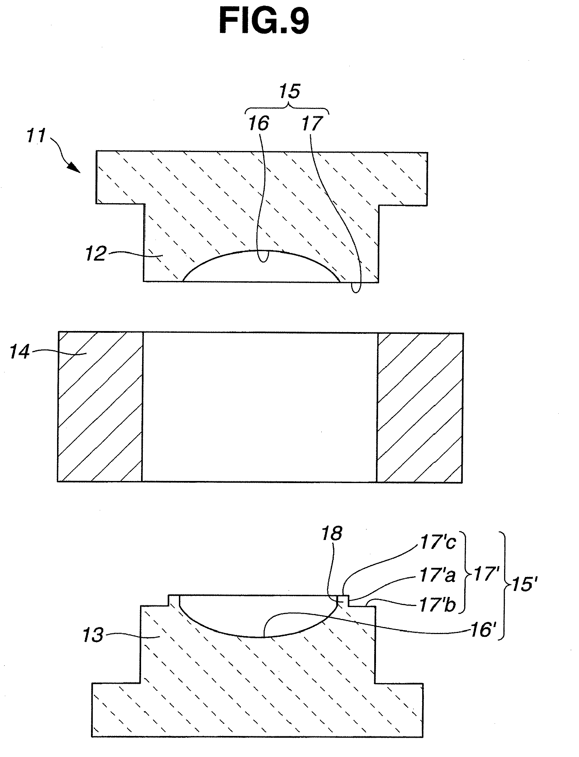

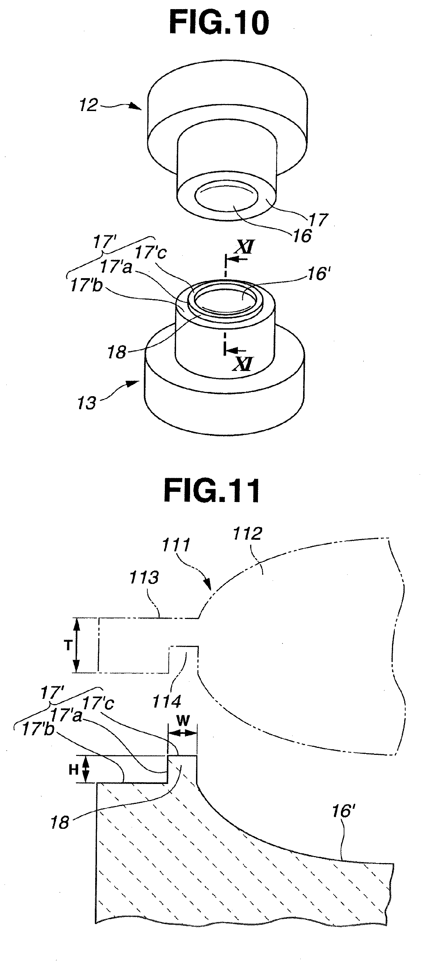

Referring to Figs. 9 to 18, there is shown a production device 11 of a second embodiment of the present invention, which produces a lens as an optical element.

As is seen from Fig. 9, like in the above-mentioned first embodiment 1, the production device 11 of this second embodiment comprises an upper glass mold 12, a lower glass mold 13 and a centering sleeve 14 by which the upper and lower glass molds 12 and 13 are centered and positioned to each other.

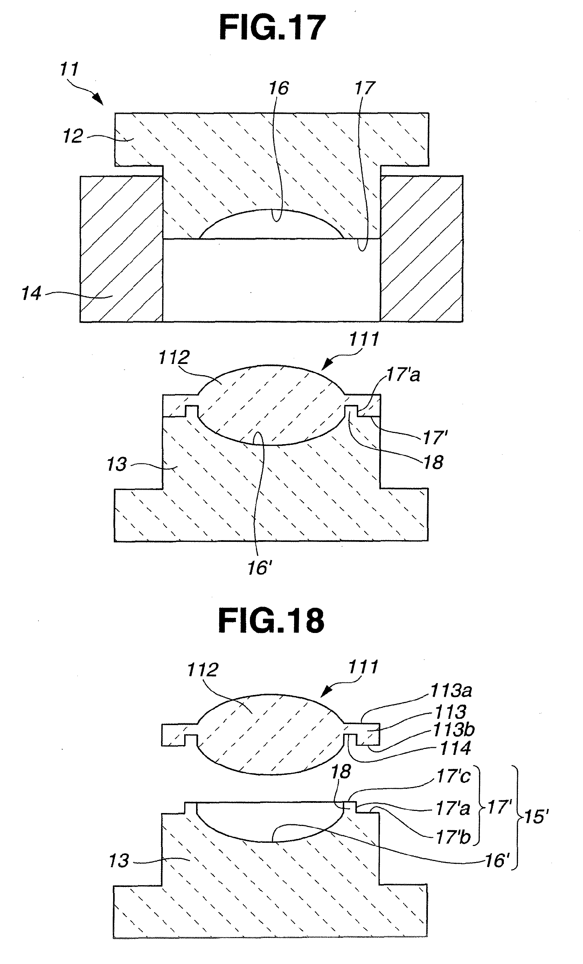

As shown in Fig. 9, mutually facing portions 15 and 15' of the upper and lower glass molds 12 and 13 are formed with respective recesses with concave molding surfaces 16 and 16' by which a lens proper portion 112 (see Fig. 18) of a lens 111 is produced as will be described in detail hereinafter.

Furthermore, as is seen from Fig. 9, the mutually facing portions 15 and 15' of the two glass molds 12 and 13 are formed with respective circular top portions 17 and 17' by which a circular flange portion 113 (see Fig. 18) of the lens 111 is produced as will be clarified hereinafter.

The molding surface 16 or 16' of each glass mold 12 or 13 is spherical or aspherical in shape, and the circular top portion 17 or 17' of each glass mold 12 or 13 is constructed to surround the corresponding concave recess 16 or 16'.

As shown in Fig. 9, the circular top portion 17 of the upper glass mold 12 is entirely flat, while the circular top portion 17' of the lower glass mold 13 has a stepped surface.

That is, the circular top portion 17' of the lower glass mold 13 comprises a first circular flat base surface 17'b, a second circular flat top surface 17'c and a cylindrical wall 17'a by which the first and second circular flat surfaces 17'b and 17'c are separated in an axial direction.

It is to be noted that the shape or construction of the circular top portion 17' of the lower glass mold 13 is made by providing the circular flat surface (or first circular flat base surface) 17'b with a smaller diameter annular ridge 18, as shown in the drawing.

As is described hereinabove, the circular top portion 7' of the lower glass mold 13 has a much complicated construction as compared with the circular top portion 7 of the upper glass mold 12.

This is because of causing the lower glass mold 13 to exhibit a much difficult releasing property against a product (viz., the lens 111) than the upper glass mold 12.

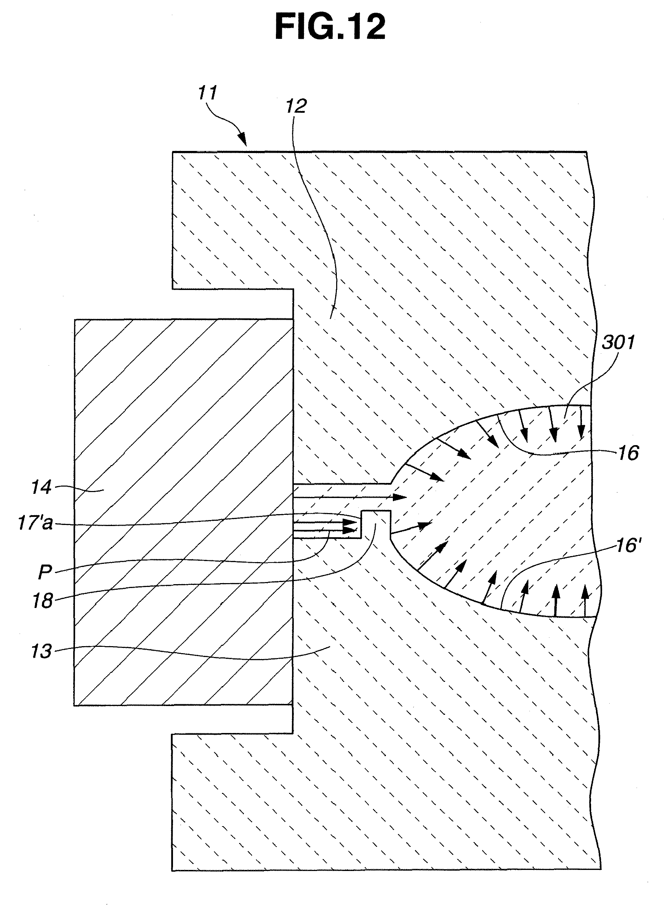

Fig. 12 is a schematic and partial view of the production device 11 of the second embodiment, by which the much difficult releasing property possessed by the lower glass mold 13 is depicted.

When an ultraviolet-curing resin 301 contained in a cavity defined by the concave recesses 16 and 16' of the upper and lower glass molds 12 and 13 is being cured by ultraviolet rays, the resin 301 is subjected to a certain contraction as is indicated by arrows. As is seen from the drawing, such contraction is directed to a center portion of the resin 301 and the contraction degree is generally proportional to a thickness of the resin 301.

As shown, during the contraction, a part "P" of the resin 301 is pressed inevitably against an outer cylindrical wall (viz., cylindrical wall 17'a) of the annular ridge 18 of the lower glass mold 13, which strengthens a binding or bonding between the resin 301 and the lower glass mold 13. Thus, releasing the product (or lens) 111 from the lower glass mold 13 becomes difficult as compared with that from the upper glass mold 12.

Of course, the binding or bonding between the resin 301 and the lower glass mold 13 increases as the height of the annular ridge 18 increases. However, if the height is excessive, the annular ridge 18 becomes fragile.

Fig. 12 depicts a dimensional connection between the annular ridge 18 and the circular flange portion 113 of the lens 111, by which the above-mentioned fragility of the annular ridge 18 is suppressed or at least minimized.

That is, in order to suppress or minimize the fragility of the annular ridge 18, the following inequality should be established:

$$H < 1/2\,T \quad\text{.................................................................}\quad (1)$$

$$W < 1/2\,T \quad\text{.................................................................}\quad (2)$$

wherein:

H: height of annular ridge 18
W: width of annular ridge 18
T: thickness of circular flange portion 113

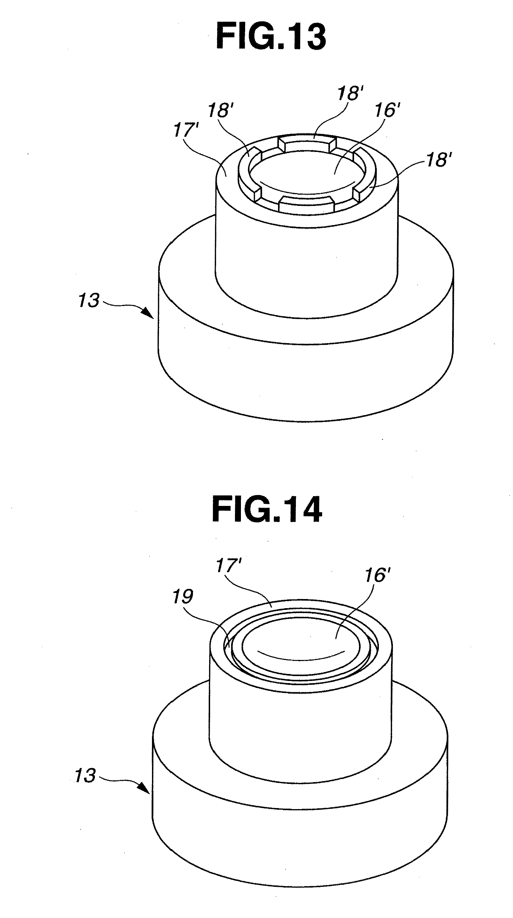

If desired, the annular ridge 18 may have modifications which are shown in Figs. 13 and 14.

In the modification of Fig. 13, a plurality of arcuate projections 18' are used in place of the annular ridge 18.

While, in the modification of Fig. 14, an annular groove 19 is used in place of the annular ridge 18.

In the following, a method of producing the lens 111 by practically using the above-mentioned production device 11 will be described in detail with the aid of the drawings.

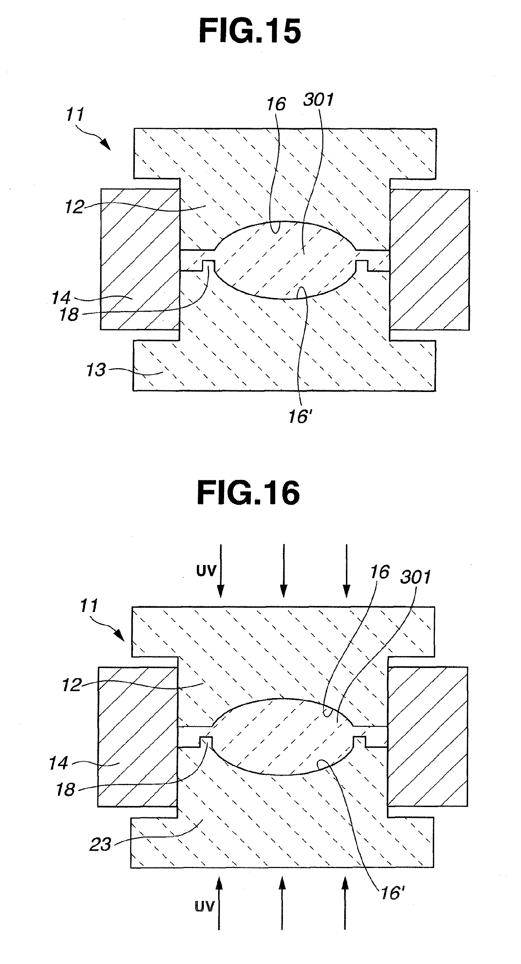

First, as is seen from Fig. 9, the upper and lower glass molds 12 and 13 are dismantled from the centering sleeve 14, and then a given amount of non-cured ultraviolet-curing resin 301 is put in the concave recess (16') of the lower glass mold 13, and then the upper and lower glass molds 12 and 13 are properly set in the centering sleeve 14, as is seen from Fig. 15. Thus, the resin 301 is compressed by the upper and lower glass molds 12 and 13 thereby being shaped into a form of the shaped clearance defined between the mutually facing portions 15 and 15' of the upper and lower glass molds 12 and 13.

Then, as is seen from Fig. 16, ultraviolet rays "UV" are applied to the resin 301 in the shaped clearance for a given time through the upper and lower glass molds 12 and 13 to cure and harden the resin 301. With this curing step, the ultraviolet-curing resin 301 becomes hardened in the production device 11. That is, a product (or lens) 111 is left in the production device 11.

Then, as is seen from Fig. 17, de-molding is carried out by moving the upper glass mold 12 upward together with the centering sleeve 14. Under this step, the lower glass mold 13 is kept fastened.

As is mentioned hereinabove, because of the advantageous releasing difficulty of the circular top portion 17' of the lower glass mold 13, the above-mentioned de-molding action instantly brings about releasing of the upper glass mold 12 from the product 111. That is, the product 111 is forced to remain in the lower glass mold 13.

Then, as is seen from Fig. 18, the product 111 is removed from the lower glass mold 13.

The product 111 is then subjected to a cleaning process for cleaning the lens proper portion 112 of the product 111. With this cleaning process, the lens 111 is finally produced.

As is seen from Fig. 18, the circular flange portion 113 of the product (or lens) 111 thus removed from the production device 11 has an entirely flat upper surface 113a and a grooved lower surface 113b. The groove is denoted by numeral 114 in the drawing.

Since the circular flange portion 113 has upper and lower surfaces 113a and 113b that are different in appearance, it is easy to discriminate the front and rear sides of the product (or lens) 111.

In the above-mentioned second embodiment, the circular top portion 17 of the upper glass mold 12 is entirely flat and the circular top portion 17' of the lower glass mold 13 is provided with the annular ridge 18. However, if desired, the circular top portion 17 of the upper glass mold 12 may be provided with such annular ridge 18 and the circular top portion 17' of the lower glass mold 13 may be entirely flat. In this case, the product (or lens) 111 is enforcedly remained in the upper glass mold 12.

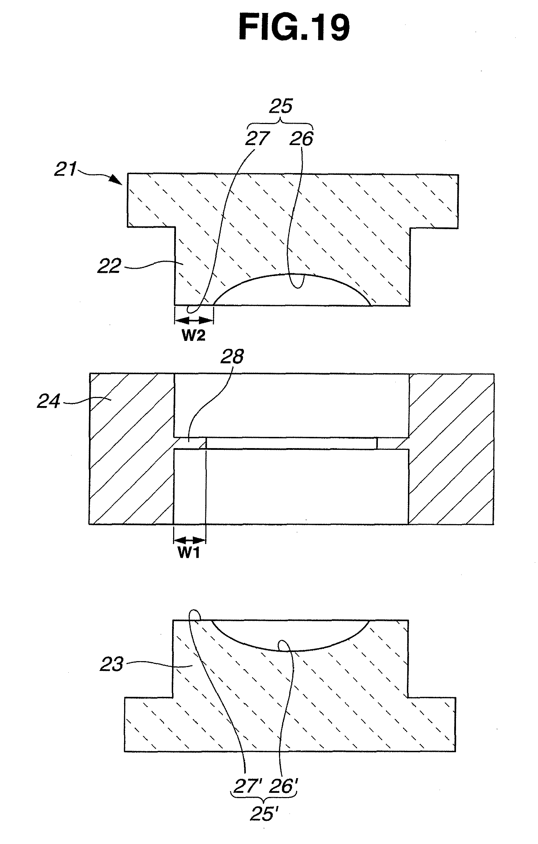

Referring to Figs. 19 to 26, there is shown a production device 21 of a third embodiment of the present invention, which produces a lens as an optical element.

As is seen from Fig. 19, like in the above-mentioned first and second embodiments 1 and 11, the production device 21 of this third embodiment comprises an upper glass mold 22, a lower glass mold 23 and a centering sleeve 24 by which the upper and lower glass molds 22 and 23 are centered and positioned to each other.

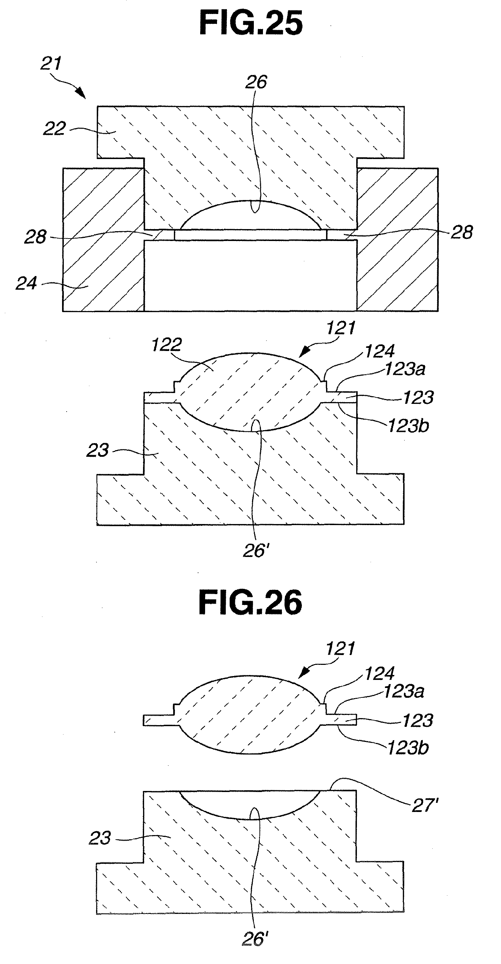

As shown in Fig. 19, mutually facing portions 25 and 25' of the upper and lower glass molds 22 and 23 are formed with respective recesses with concave molding surfaces 26 and 26' by which a lens proper portion 122 (see Fig. 26) of a lens 121 is produced as will be described in detail hereinafter.

Furthermore, as is seen from Fig. 19, the mutually facing portions 25 and 25' of the two glass molds 22 and 23 are formed with respective circular top surfaces 27 and 27' by which a circular flange portion 123 (see Fig. 26) of the lens 121 is produced as will be clarified hereinafter.

The molding surface 26 or 16' of each glass mold 22 or 23 is spherical or aspherical in shape, and the circular top surface 27 or 27' of each glass mold 22 or 23 is constructed to surround the corresponding concave recess 26 or 26'.

As shown in Fig. 19, the circular top surface 27 or 27' of each glass mold 22 or 23 is entirely flat.

Furthermore, as is seen from Fig. 19, the centering sleeve 24 is formed at a cylindrical inner wall thereof with an annular ridge 28.

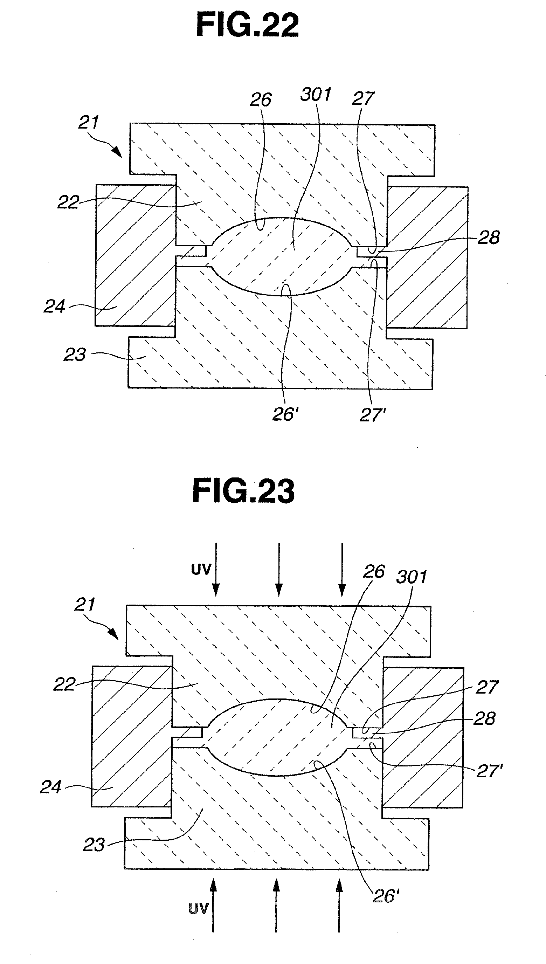

As is seen from Fig. 22, when the upper and lower glass molds 22 and 23 are properly put into the centering sleeve 24, the circular top surface 27 of the upper glass mold 22 intimately contacts an upper surface of the annular ridge 28, while the circular top surface 27' of the lower glass mold 23 fails to contact a lower surface of the annular ridge 28 thereby leaving a certain flat clearance therebetween.

With this measure, the product (or lens) 121 is enforcedly remained in the lower glass mold 23 upon de-molding, as will be described in detail hereinafter.

It is now to be noted that as is shown in Fig. 19, the annular ridge 28 of the centering sleeve 24 and the circular top surface 27 of the upper glass mold 21 have a dimensional connection therebetween, which is:

$$W1 < W2 \quad .................................................................. \quad (3)$$

wherein:

W1:    width of annular ridge 28
W2:    width of circular top surface 27

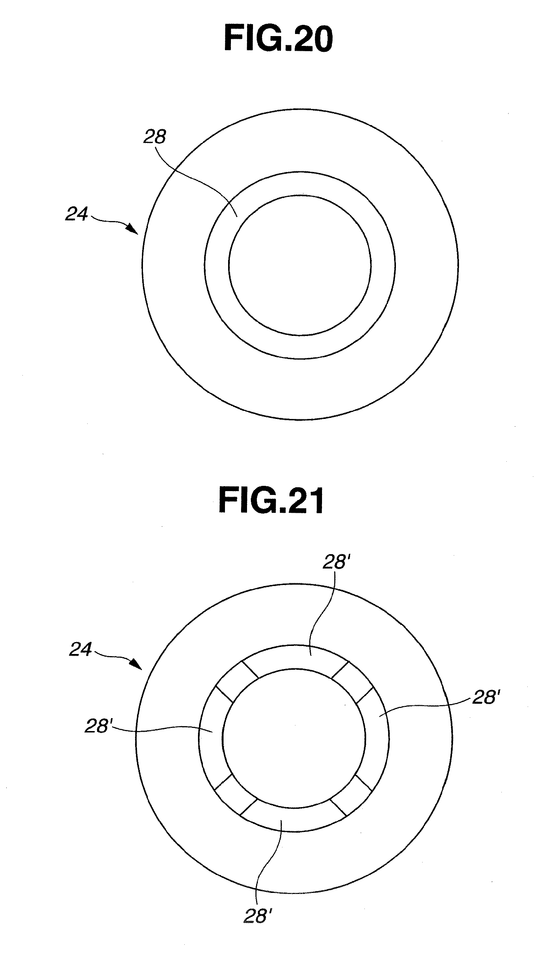

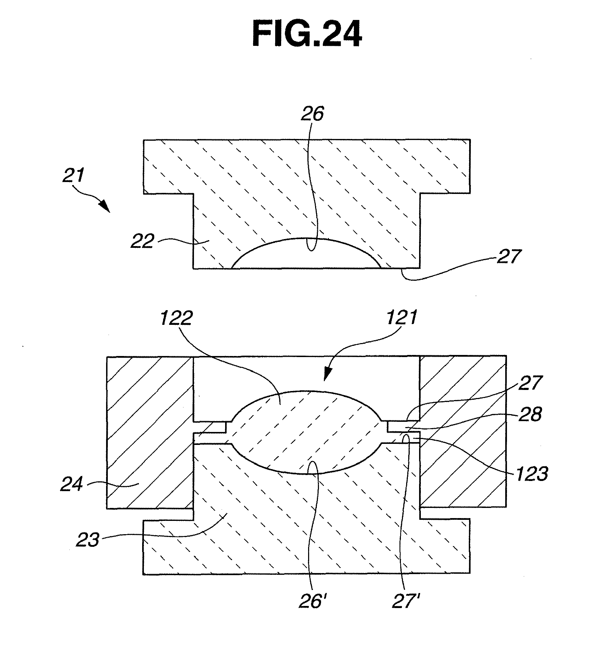

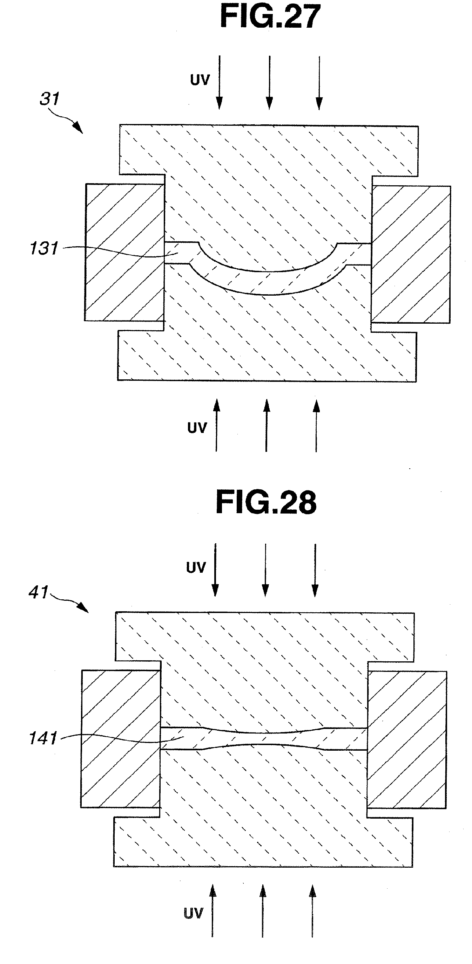

If desired, the annular ridge 28 may have a modification which is shown in Fig. 21. As shown, in this modification, a plurality of arcuate projections 28' are used in place of the annular ridge 28.
In the following, a method of producing the lens 121 by practically using the above-mentioned production device 21 will be described in detail with the aid of the drawings.
First, as is seen from Fig. 19, the upper and lower glass molds 22 and 23 are dismantled from the centering sleeve 24, and then a given amount of non-cured ultraviolet-curing resin 301 is put in the concave recess (26') of the lower glass mold 23, and then as is seen from Fig. 22, the upper and lower glass molds 22 and 23 are properly set in the centering sleeve 24. Thus, the resin 301 is compressed by the upper and lower glass molds 22 and 23 thereby being shaped into a form of the shaped clearance defined between mutually facing portions 25 and 25' of the upper and lower glass molds 22 and 23.
As is seen from Fig. 22, under this condition, the annular top surface 27 of the upper glass mold 22 intimately contacts the annular ridge 28, while the annular top surface 27' of the lower glass mold 23 is kept away from the annular ridge 28 leaving therebetween a certain flat clearance in which part of the resin 301 is received.
Then, as is seen from Fig. 23, ultraviolet rays "UV" are applied to the resin 301 in the shaped clearance for a given time through the upper and lower glass molds 22 and 23 to cure and harden the resin 301. With this curing step, the ultraviolet-curing resin 301 becomes hardened in the production device 21. That is, a product (or lens) 121 is left in the production device 21.
Then, as is seen from Fig. 24, de-molding is carried out by moving the upper glass mold 22 upward. Under this step, the centering sleeve 24 and the lower glass mold 23 are kept fastened.
Because of provision of the annular ridge 28 of the centering sleeve 24, the cured resin 301, viz., the product 121 is left in a unit that includes the lower glass mold 23 and the centering sleeve 24, as shown.
Then, as is seen from Fig. 25, the centering sleeve 24 is moved up from the lower glass mold 23 and put into the upper glass mold 22. With this, the product 121 is remained in the lower glass mold 23.
As is seen from Fig. 24, since the contact surface of the annular ridge 28 relative to the circular flange portion 123 of the product 121 is smaller than that of the circular top surface 27' of the lower glass mold 23 relative to the circular flange portion 123, the centering sleeve 24 is smoothly released from the product 121 that is left on the lower glass mold 23.
Then, as is seen from Fig. 26, the product 121 is removed from the lower glass mold 23.
The product 121 is then subjected to a cleaning process to become a finished lens.
As is described hereinabove, due to the difference in contact area between the annular ridge 28 of the centering sleeve 24 and the circular top surface 27' of the lower glass mold 23 relative to the circular flange portion 123 of the product 121, the product 121 is remained on the lower glass mold 23 even when the centering sleeve 24 is moved upward. This facilitates the process of producing the product 121.
As is understood from Fig. 26, the circular flange portion 123 of the product 121 has upper and lower surfaces 123a and 123b that are different in appearance. That is, an annular step 124 is formed on the upper surface 123a in a manner to surround the lens proper portion 122. Thus, it is easy to discriminate the front and rear sides of the product (or lens) 121.
Although the production devices 1, 11 and 21 of the above-mentioned first, second and third embodiments are constructed to produce a so-called biconvex lens 101, 111 or 121, the present invention is also applicable to production devices such as the device 31 as shown in Fig. 27 that produces a so-called meniscus lens 131 and the device 41 as shown in Fig. 28 that produces a so-called biconcave lens 141.
In the above-mentioned embodiments, ultraviolet-curing resin is used as a material of the optical element. Other type resins that become hardened when receiving radial rays may be used as the material. In the above-mentioned embodiments, the upper and lower molds used are produced from glass. But, if desired, such molds may be produced from other materials so long as they permit penetration of the radial rays.
It should be understood by those skilled in the art that various modifications, combinations, sub-combinations and other factors insofar as they are within the scope of the appended claims or the equivalents thereof.

**Claims**

1. A lens produced from a radial rays-curing resin, comprising:

   a lens proper portion (102; 112; 122) that serves as an optically effective part of the lens; and
   a circular flange portion (103; 113; 123) that surrounds the lens proper portion (102; 112; 122), the circular flange portion (103; 113; 123) serving as an optically non-effective part of the lens (101; 111; 121),

   wherein the circular flange portion (103; 113; 123) has front and rear surfaces (103a, 103b; 113a, 113b; 123a, 123b) that are different in appearance.

2. A lens as claimed in Claim 1, in which the front surface (103a) of the circular flange portion (103) is more roughened than the rear surface (103b).

3. A lens as claimed in Claim 1, in which the rear surface (113b) of the circular flange portion (113) is formed with an annular groove (114) that surrounds the lens proper portion (112).

4. A lens as claimed in Claim 1, in which the front surface (123a) of the circular flange portion (123) is formed with an annular step (124) that surrounds the lens proper portion (122).

5. A lens as claimed in Claim 1, in which the lens proper portion (102; 112; 122) is of a biconvex type.

6. A lens as claimed in Claim 1, in which the lens proper portion is of a biconcave type.

7. A lens as claimed in Claim 1, in which the lens proper portion is of a meniscus type.

8. A lens as claimed in Claim 1, in which the radial rays-curing material is an ultraviolet-curing resin.

9. A production device of producing an optical element by curing a radial rays-curing resin, comprising:

   first and second molds (2, 3; 12, 13; 22, 23) of which mutually facing portions (5, 5'; 15, 15'; 25, 25') are respectively formed with first and second recesses (6, 6'; 16, 16'; 26, 26') which are respectively surrounded by first and second top surfaces (7, 7'; 17, 17'; 27, 27'), at least one of the first and second molds (2, 3; 12, 13; 22, 23) being constructed of a material that permits penetration of radial rays therethrough; and
   a centering sleeve (4; 14; 24) into which the first and second molds (2, 3; 12, 13; 22, 23) are partially received in such a manner that the first and second recesses (6, 6'; 16, 16'; 26, 26') face each other leaving a certain clearance between the first and second top surfaces (7, 7'; 17, 17'; 27, 27'), thereby to define between the mutually facing portions (5, 5'; 15, 15'; 25, 25') of the first and second molds (2, 3; 12, 13; 22, 23) a shaped clearance that is adapted to receive therein a given amount of non-cured radial rays-curing resin, the radial rays-curing resin being cured and hardened when receiving the radial rays;

   wherein the first top surface (7; 17; 27) is constructed to exhibit an easier releasing ability to the cured and hardened radial rays-curing resin than the second top surface (7'; 17'; 27').

10. A production device as claimed in Claim 9, in which the first top surface (7) is more roughened than the second top surface (7').

11. A production device as claimed in Claim 9, in which the second top surface (17') is formed with an annular ridge (18) that surrounds the second recess (16') and projects toward the first mold (12).

12. A production device as claimed in Claim 9, in which the centering sleeve (24) is formed at a cylindrical inner wall thereof with an annular ridge (28) that has one surface onto which the first top surface (27) of the first mold (22) is intimately put when the first mold (22) is properly set in the centering sleeve (24).

# FIG.1

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

# FIG.18

# FIG.19

# FIG.20

28

24

# FIG.21

28'

24

28'

28'

28'

28'

# FIG.22

# FIG.23

# FIG.24

# FIG.25

# FIG.26

# FIG.27

UV ↓ ↓ ↓

31

131

UV ↑ ↑ ↑

# FIG.28

UV ↓ ↓ ↓

41

141

UV ↑ ↑ ↑

# FIG.29

# FIG.30

# FIG.31

**European Patent Office**

**EUROPEAN SEARCH REPORT**

Application Number

EP 07 11 5257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2005 193646 A (MATSUSHITA ELECTRIC IND CO LTD) 21 July 2005 (2005-07-21) * figures 1,2,3a,3b * | 1,2,5-9 | INV. G02B7/02 ADD. B29D11/00 |
| X | US 2006/018036 A1 (HUANG HSIN-CHIEH [TW]) 26 January 2006 (2006-01-26) * paragraphs [0037], [0038]; figures 3A,4a,4b * | 1,3,5-10 | |
| X | US 2004/125470 A1 (CHIANG CHING-FA [TW]) 1 July 2004 (2004-07-01) * paragraphs [0012] - [0018]; figures 4-10 * | 1,4-9, 11,12 | |
| X | US 6 469 844 B1 (IWASE KAZUHITO [JP] ET AL) 22 October 2002 (2002-10-22) * column 3, lines 20-62; figures 2,3a,3B * | 1,4-9,11 | |
| A | US 4 738 516 A (VERHOEVEN JOHANNES M G [NL] ET AL) 19 April 1988 (1988-04-19) * column 4, lines 9-34; figure 5 * | 9-12 | TECHNICAL FIELDS SEARCHED (IPC) |
| A | JP 55 069101 A (MITSUBISHI RAYON CO) 24 May 1980 (1980-05-24) * abstract; figures 1-8 * | 1-7 | G02B B29D C03B |

The present search report has been drawn up for all claims

| Place of search | Date of completion of the search | Examiner |
|---|---|---|
| Munich | 14 November 2007 | Casse, Martin |

**ANNEX TO THE EUROPEAN SEARCH REPORT
ON EUROPEAN PATENT APPLICATION NO.**

EP 07 11 5257

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2007

| Patent document cited in search report | | Publication date | Patent family member(s) | | Publication date |
|---|---|---|---|---|---|
| JP 2005193646 | A | 21-07-2005 | NONE | | |
| US 2006018036 | A1 | 26-01-2006 | NONE | | |
| US 2004125470 | A1 | 01-07-2004 | NONE | | |
| US 6469844 | B1 | 22-10-2002 | NONE | | |
| US 4738516 | A | 19-04-1988 | CS | 8500285 A2 | 12-03-1987 |
| | | | DD | 231315 A5 | 24-12-1985 |
| | | | DE | 3470686 D1 | 01-06-1988 |
| | | | EP | 0150537 A2 | 07-08-1985 |
| | | | JP | 60154014 A | 13-08-1985 |
| | | | NL | 8400152 A | 01-10-1984 |
| | | | US | 4623496 A | 18-11-1986 |
| JP 55069101 | A | 24-05-1980 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55132221 A
- JP 7100835 A
- JP 8001807 A
- JP 2002127157 A
- JP 2006021507 A